# FASCICULE DE BREVET EUROPEEN

(11) **EP 2 577 915 B1**
(45) Date de publication et mention de la délivrance du brevet: **22.05.2019**
(21) Numéro de dépôt: 11726894.6
(22) Date de dépôt: 24.05.2011
(51) Int. Cl.: H04L 12/28

(54) **PARTAGE D'INFORMATIONS DE CONTEXTE DE RESTITUTION ENTRE DISPOSITIFS DE PILOTAGE**
PLAYBACK CONTEXTUAL INFORMATIONSAUSTAUSCH ZWISCHEN STEUERGERÄTEN
PLAYBACK CONTEXTUAL INFORMATION SHARING BETWEEN CONTROLLING DEVICES

(30) Priorité: 25.05.2010 FR 1054040
(43) Date de publication de la demande: 10.04.2013
(73) Titulaire: Orange, 75015 Paris (FR)
(72) Inventeur: AGRO, Roberto, F-92340 Bourg La Reine (FR)
(86) Numéro de dépôt international: PCT/FR2011/051172
(87) Numéro de publication internationale: WO 2011/148095

(56) Documents cités:
- EP-A1- 1 814 261
- WO-A1-2005/002139
- US-A1- 2006 089 981

## Description

L'invention concerne le domaine des contenus numériques et des équipements de restitution de contenus numériques. Elle a pour objet un procédé et un dispositif de pilotage de tels équipements.

Dans le domaine des réseaux domestiques, le protocole UPnP / DLNA s'impose comme un standard pour le partage, la diffusion et le contrôle des contenus numériques. En particulier, la partie UPnP AV (pour UPNP Audio and Video) du standard UPNP définit des mécanismes et une architecture permettant une mise en relation, de type réseau de pairs, entre les entités UPnP. Chaque entité UPnP peut être intégrée physiquement dans un des terminaux du réseau local ou encore dans un équipement de type passerelle d'interconnexion (Gateway), set-top-box (STB), routeur ou serveur de stockage de type NAS (Network Attached Storage), etc. Les mécanismes de communication prévus dans le standard UPnP sont conçus pour permettre une interopérabilité entre les entités UPnP. Parmi ces entités, on distingue:
- les serveurs de contenus multimédia, appelés DMS (« *Digital Media Server* ») dans le contexte UPnP; un tel serveur est une entité référençant et stockant des contenus multimédia ;
- les dispositifs de restitution UPnP / DLNA, comprenant les dispositifs de restitution de type DMR (de l'anglais « Digital Media Renderer ») ou DMP (de l'anglais "Digital Media Player") en charge de la restitution d'un contenu multimédia;
- les dispositifs de pilotage UPnP, également appelés "Points de Contrôle" et notés DMC (de l'anglais « *Digital Media Controller* ») ; un tel dispositif de pilotage DMC est une entité du réseau qui est apte à détecter les dispositifs UPnP présents dans un réseau, à déterminer quels sont les services qu'ils proposent, recevoir des événements de ces dispositifs et les commander en leur envoyant des commandes (appelées "actions" dans le standard UPnP).

Un Point de Contrôle UPnP fait ainsi le lien entre les différents équipements UPNP en veillant à ce que ceux-ci disposent des informations qui leur sont nécessaires.

Au sein d'un réseau domestique, les équipements de restitution compatibles UPnP sont de plus en plus nombreux. Il en est de même pour les logiciels de pilotage intégrant un Point de Contrôle UPnP et capables de piloter de tels équipements.

Il est donc souhaitable de disposer d'une solution technique permettant de piloter un même équipement de restitution avec deux ou plusieurs logiciels de pilotage: par exemple un premier logiciel dans un terminal mobile, un deuxième logiciel dans un ordinateur personnel, etc.

Pour ce faire, il est utile que les informations sur la restitution en cours et sur le contenu en cours de restitution soient facilement mis à disposition de tout logiciel de pilotage qui serait utilisé pour piloter l'équipement de restitution, afin de pouvoir basculer facilement d'un logiciel de pilotage à un autre. Il est notamment souhaitable de présenter à l'utilisateur l'arborescence de répertoires du DMS qui référence ce contenu quand cet utilisateur reprend la main avec un autre DMC que celui ayant servi à initier la restitution.

Le document de brevet EP1814261A1 n'évoque pas cette problématique de basculement d'un dispositif de pilotage à un autre.

Le document de brevet WO2005/002139 décrit à ce sujet une méthode pour transmettre un contexte organisationnel d'un contenu sélectionné pour la restitution à un DMR. Cette méthode consiste à enrichir les métadonnées du contenu avec un champ de description de protocole "Protocollnfo" et une ressource particulière associée, ce champ comprenant l'adresse URI (Uniform Resource Identifier) du service CDS (Content Directory Service) du DMS référençant le contenu et un paramètre qui est l'identifiant d'objet référençant le contenu dans le CDS.

Cette méthode nécessite toutefois d'implémenter un nouveau type de protocole associé à une ressource particulière, qui contient l'adresse URI du CDS du serveur de contenus et un identifiant d'objet "objectID" du contenu sélectionné.

Un des buts de l'invention est de remédier à des problèmes, inconvénients ou insuffisances de l'état de la technique et/ou d'y apporter des améliorations.

L'invention concerne, selon un premier aspect, un procédé de pilotage mis en oeuvre par un dispositif de pilotage de dispositifs de restitution et de serveurs de contenus d'une architecture UPnP ou DLNA de gestion de contenus, le procédé comprenant
- une étape d'envoi à un dispositif de restitution de paramètres de restitution localisant un contenu à restituer, les paramètres de restitution envoyés étant susceptibles d'être obtenus par un autre dispositif de pilotage par interrogation dudit dispositif de restitution;
- une étape de déclenchement de la restitution, par le dispositif de restitution, dudit contenu à restituer localisé par les paramètres de restitution envoyés,
les paramètres de restitution étant enrichis, préalablement à leur envoi (230), d'un identifiant de serveur de type UDN désignant le serveur de contenus référençant le contenu à restituer, l'identifiant de serveur de type UDN étant utilisable pour adresser à partir de l'autre dispositif de pilotage au serveur de contenus référençant ledit contenu à restituer une commande d'interrogation de ce serveur de contenus de contenus sur des contenus référencés par ce serveur.

L'invention propose une méthode de transmission d'informations d'un dispositif de pilotage (un DMC, par exemple) à un autre, méthode dans laquelle le dispositif de restitution (un DMR, par exemple) sert d'intermédiaire, les informations transmises étant celles nécessaires pour permettre une continuité d'usage lorsqu'un utilisateur bascule d'un dispositif de pilotage à un autre.

Ces informations sont jointes aux paramètres de restitution envoyés par le dispositif de pilotage au dispositif de restitution lors d'une phase de paramétrage préalable à la restitution. Cet envoi de paramètres de restitution est effectué dans le cas d'exemple d'un dispositif de restitution UPnP par invocation d'une action nommée "SetAVT ransportURI".

En l'occurrence, il est prévu dans l'invention de joindre aux paramètres de restitution un identifiant de serveur, au moyen duquel il est possible d'interroger ce serveur de contenus de contenus sur les contenus multimédia référencés par ce serveur de contenus de contenus et sur l'arborescence de ces contenus.

Dans le standard UPnP, un tel identifiant est sous forme d'identifiant UDN (Unique Device Name) et permet d'adresser à un serveur de contenus des requêtes UPnP (actions UPnP), par exemple des requêtes nommées « Browse » au moyen desquelles il est possible d'obtenir des informations sur l'arborescence des contenus référencés par ce serveur.

Dans le cas d'exemple du protocole UPnP, le dispositif de restitution UPnP ne reçoit dans les paramètres de restitution qu'une adresse URI lui indiquant la localisation du contenu à restituer. Il n'a pas d'information sur le serveur de contenus lui-même, ni sur les éléments référencés dans le répertoire du CDS du serveur de contenus dans lequel se trouve le contenu à restituer.

La connaissance de l'identifiant de serveur permet donc d'interroger le serveur de contenus pour obtenir une liste de contenus multimédia référencés par ce serveur de contenus serveur de contenus et de présenter à l'utilisateur une interface utilisateur de consultation de tels contenus. Grâce à l'invention cette interface utilisateur de consultation pourra notamment comprendre une arborescence de contenus et une indication / information sur la position dans cette arborescence du contenu à restituer.

Lorsque l'utilisateur sélectionne ou utilise un autre dispositif de pilotage, l'interface utilisateur du dispositif de pilotage nouvellement sélectionné pourra ainsi afficher l'arborescence ou la partie d'arborescence contenant le contenu à restituer. Il peut s'agir par exemple d'un répertoire de cette arborescence qui comprend une liste de contenus multimédia. Un tel répertoire peut être représentatif d'une liste de lecture ("play list", en anglais).

Dans le cas d'exemple du standard UPnP, seul le dispositif de pilotage (Point de Contrôle UPnP) qui a déclenché la restitution a connaissance de cet identifiant de serveur et est en mesure de fournir cette information. En particulier, l'adresse URI d'un contenu en cours de restitution ne permet pas de retrouver cet identifiant de serveur.

Enfin, dès que l'on est en présence de plusieurs serveurs de contenus dans un même réseau, cet identifiant de serveur ne peut être obtenu simplement. L'invention résout ce problème en stockant cet identifiant de serveur dans le dispositif de restitution, en tant que partie des paramètres de restitution, afin que cet identifiant de serveur soit accessible par tout dispositif de pilotage qui interrogerait le dispositif de restitution relativement à une restitution en cours, terminée ou à venir.

Le fait de mémoriser l'identifiant de serveur dans les paramètres de restitution permet également de gérer indépendamment chaque restitution programmée dans le dispositif de restitution en charge de cette restitution, sans avoir à gérer une identification par dispositif de restitution si cette information devait être stockée dans une autre entité du réseau.

Dans un mode de réalisation particulier de l'invention, un identifiant d'objet (dans le cas d'UPnP, cet identifiant d'objet est nommé "Objectld"), utilisé par le serveur de contenus pour référencer le contenu multimédia, est joint aux paramètres de restitution. Cet identifiant d'objet est celui utilisé dans le répertoire CDS du serveur de contenus pour référencer le contenu multimédia en question.

La connaissance de l'identifiant d'objet permet en outre de présenter à l'utilisateur une interface utilisateur de consultation de contenus multimédia référencés par le serveur de contenus et d'identifier et/ou présélectionner dans cette interface utilisateur le contenu en cours de restitution.

Dans le cas d'exemple du standard UPnP, seul le DMC qui a déclenché la restitution a connaissance de cet identifiant d'objet. Un autre DMC, distinct de celui qui a initié la restitution, ne peut interroger le serveur de contenus et n'a pas d'information sur le répertoire du contenu en cours de restitution : l'utilisateur de cet autre DMC devra à nouveau naviguer à travers les listes de contenus multimédia référencés par les serveur de contenus pour retrouver le répertoire dans lequel se trouve le contenu et le contenu lui-même.

En outre, si l'utilisateur a déclenché une restitution d'une liste de contenus multimédia, c'est-à-dire une "playlist", définie par un répertoire du CDS, et que le DMC qui a déclenché la restitution disparaît du réseau, le DMR a la possibilité de déclencher lui-même la restitution du contenu suivant, puisque par interrogation du serveur de contenus au moyen de l'identifiant de serveur, il peut obtenir une adresse du contenu suivant dans le répertoire en question, sans nécessiter l'intervention d'un DMC.

Selon un mode de réalisation, le procédé selon l'invention comprend une étape d'enrichissement de métadonnées dudit contenu avec ledit identifiant de serveur de type UDN, les paramètres de restitution envoyés comprenant les métadonnées enrichies. Dans ce mode de réalisation c'est le dispositif de pilotage lui-même qui enrichit les paramètres de restitution avec l'identifiant de serveur.

Selon un mode de réalisation, le procédé selon l'invention comprend une étape d'obtention, auprès dudit serveur de contenus, de métadonnées dudit contenu enrichies avec ledit identifiant de serveur de type UDN, les paramètres de restitution envoyés comprenant les métadonnées enrichies. Dans ce mode de réalisation c'est le serveur de contenus qui enrichit métadonnées du contenus avec l'identifiant de serveur, afin que cet identifiant de serveur de contenus soit transmis dans les métadonnées enrichies au dispositif de restitution.

Les différents modes de réalisation mentionnés ci-dessus sont combinables entre eux pour la mise en oeuvre de l'invention.

L'invention concerne, selon un deuxième aspect, un premier dispositif de pilotage de dispositifs de restitution et de serveurs de contenus d'une architecture UPnP ou DLNA de gestion de contenus, ce premier dispositif de pilotage comprenant
- des moyens d'envoi à un dispositif de restitution de paramètres de restitution localisant un contenu à restituer, les paramètres de restitution envoyés étant susceptibles d'être obtenus par un autre dispositif de pilotage par interrogation dudit dispositif de restitution;
- des moyens de déclenchement de la restitution dudit contenu,
les paramètres de restitution envoyés étant enrichis d'un identifiant de serveur de type UDN désignant un serveur de contenus, l'identifiant de serveur étant utilisable pour adresser, au serveur de contenus référençant ledit contenu à restituer, une commande d'interrogation de ce serveur de contenus serveur de contenus sur des contenus référencés par ce serveur.

Symétriquement, l'invention concerne un deuxième dispositif de pilotage de dispositifs de restitution et de serveurs de contenus d'une architecture UPnP ou DLNA de gestion de contenus, ce deuxième dispositif de pilotage comprenant
- des moyens d'interrogation d'un dispositif de restitution pour obtenir des paramètres de restitution, localisant un contenu en cours de restitution, fournis à ce dispositif de restitution par un dispositif de pilotage ayant déclenché ladite restitution et enrichis d'un identifiant de serveur de type UDN désignant le serveur de contenus référençant le contenu en cours de restitution;
- des moyens pour, en utilisant ledit identifiant de serveur de type UDN, adresser audit serveur de contenus une commande d'interrogation de ce serveur de contenus sur des contenus référencés par ce serveur de contenus;
- des moyens de présentation à un utilisateur d'une interface utilisateur de consultation de contenus référencés par ce serveur de contenus.

Les avantages énoncés pour le procédé selon l'invention sont transposables directement aux premier et deuxième dispositifs selon l'invention.

Plus généralement, les premier et le deuxième dispositifs de pilotage selon l'invention comprennent chacun des moyens de mise en oeuvre des étapes du procédé selon l'invention.

Selon une implémentation préférée, les différentes étapes du procédé selon l'invention sont mises en oeuvre par un logiciel ou programme d'ordinateur, ce logiciel comprenant des instructions logicielles destinées à être exécutées par un processeur de données du premier ou deuxième dispositif de pilotage selon l'invention et étant conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

D'autres buts, caractéristiques et avantages de l'invention apparaîtront à travers la description qui va suivre, donnée uniquement à titre d'exemple non limitatif, et faite par référence aux dessins annexés dans lesquels:
- la figure 1 représente de manière schématique un système de communication intégrant un dispositif selon l'invention;
- la figure 2 représente un organigramme d'un premier mode de réalisation du procédé selon l'invention;
- la figure 3 représente un organigramme d'un deuxième mode de réalisation du procédé selon l'invention.

### Rappels sur le standard UPnP

Le standard UPnP fournit des mécanismes et une architecture permettant une mise en relation, de type réseau de pairs, entre les entités UPnP. Chaque entité UPnP peut être intégrée physiquement dans un des terminaux du réseau local ou encore dans un équipement de type passerelle d'interconnexion (Gateway), set-top-box (STB), routeur ou serveur de stockage de type NAS (Network Attached Storage), etc. Les mécanismes de communication prévus dans le standard UPnP sont conçus pour permettre une interopérabilité entre les entités UPnP. Le protocole UPnP utilise notamment les protocoles TCP/UDP/IP (Transmission Control Protocol/User Datagram Protocol/Internet Protocol) pour le transport des requêtes UPnP.

Dans le contexte de ce document, une entité est dite entité UPnP si elle est conforme au standard UPnP ou à un autre standard équivalent ou dérivé, notamment si elle utilise un protocole de commande conforme à un tel standard.

Une architecture UPnP de gestion de contenus multimédia comprend généralement :
- un ou plusieurs serveurs de contenus multimédia, appelés DMS (de l'anglais « *Digital Media Server* ») dans le contexte UPnP; un tel serveur de contenus est une entité référençant et stockant des contenus multimédia ;
- un ou plusieurs dispositifs de pilotage UPnP, également appelé DMC (de l'anglais « *Digital Media Controller* ») ; un tel dispositif de pilotage DMC est une entité du réseau qui est apte à détecter les dispositifs UPnP présents dans un réseau, à déterminer quels sont les services qu'ils proposent, recevoir des événements de ces dispositifs et les commander en leur envoyant des commandes (appelées "actions" dans le standard UPnP) ;
- un ou plusieurs dispositifs de restitution UPnP, comprenant les dispositifs de restitution de type DMR (de l'anglais « Digital Media Renderer ») ou DMP (de l'anglais "Digital Media Player") en charge de la restitution d'un contenu multimédia; un dispositif de restitution DMR ou DMP met en oeuvre, conformément au standard UPnP, les services nommés "AVTransport", "ConnectionManager" et "RenderingControl" .

Un dispositif de pilotage DMC, est réalisé usuellement sous forme de module logiciel, couplé à une interface utilisateur du terminal incorporant ce dispositif de pilotage, cette interface utilisateur permettant à un utilisateur de sélectionner un contenu multimédia mis à disposition par un serveur de contenus DMS et de le restituer sur un dispositif de restitution DMR de son choix.

Selon le standard UPnP, la restitution d'un contenu multimédia comporte usuellement les étapes suivantes :
- le dispositif de pilotage DMC obtient du serveur de contenus DMS, par envoi d'une requête nommée "Browse", les métadonnées et identifiants des contenus multimédia référencés par le serveur de contenus DMS, afin que l'utilisateur puisse sélectionner un contenu multimédia à restituer;
- le dispositif de pilotage DMC spécifie au dispositif de restitution DMR l'identifiant du contenu multimédia à restituer en utilisant une requête d'initialisation, appelée action "*SetAVTransportURI* » ;
- le dispositif de pilotage DMC déclenche la restitution du contenu multimédia sur le dispositif de restitution DMR visé en envoyant une requête d'exécution, appelée action « *Play* » ;
- le dispositif de restitution DMR transmet alors au serveur de contenus DMS une requête pour l'obtention du contenu multimédia, en envoyant une requête nommée "GET" conforme au protocole HTTP.
- le serveur de contenus DMS transmet en réponse au dispositif de restitution DMR le contenu multimédia codé, par envoi de paquets de données conformément au protocole HTTP.

L'invention permet de conserver ce mode de fonctionnement et cette succession d'étapes afin de proposer une méthode de partage d'information de contexte de restitution qui soit compatible avec tous les serveurs de contenus UPnP et dispositifs de restitution UPnP existant.

Selon le standard UPnP, un serveur de contenus DMS comprend une base de données pour mémoriser les métadonnées des contenus accessibles via ce serveur de contenus de contenus DMS. Cette base de données est appelée CDS (de l'anglais, "Content Directory Service") et est organisée sous forme d'une arborescence d'objets. Pour chaque objet, un ou plusieurs champs de données sont utilisés pour mémoriser les propriétés de cet objet: ces champs de données constituent les métadonnées de cet objet. Chaque objet de cette base de données est identifiées par un identifiant d'objet, nommé "Objectld" dans UPnP.

Pour chaque objet, un ou plusieurs champs de données sont utilisés pour mémoriser les propriétés de cet objet: ces champs de données constituent les métadonnées de cet objet.

Une des propriétés d'un objet est sa classe d'appartenance. Chaque objet est en effet affecté à une classe d'objet, le nom de cette classe d'objet étant mémorisé dans un champ de données nommé "upnp:class".

Les classes d'objet sont organisées de manière hiérarchisée et arborescente, certaines classes étant dérivées d'autres classes, selon ce qui est usuel en conception orientée objet. La racine de cette arborescence est la classe de base nommée "object". De cette classe de base "object", sont dérivées deux classes principales: d'une part, la classe "object.item", définissant un élément ou contenu multimédia (morceau de music, séquence vidéo, texte, etc), d'autre part, la classe "object.container", définissant un container ou ensemble de plusieurs contenus multimédia.

A chaque contenu multimédia - c'est-à-dire à chaque objet appartenant à la classe "object.item" - sont associées une ou plusieurs ressources, chacune correspond à un fichier de données de contenu.

Pour chaque ressource, un ou plusieurs champs de données sont utilisés pour mémoriser les propriétés de cette ressource. Ces champs de données font partie des métadonnées du contenu associé. Parmi les propriétés d'une ressource, il est connu d'utiliser dans le standard UPnP:
- une adresse sous la forme d'un identifiant URI (de l'anglais « Uniform Resource Identifier »), servant à la fois d'identifiant de fichier et d'adresse de l'entité du réseau auprès de laquelle ce fichier peut être obtenu, en l'occurrence une adresse d'un serveur de contenus DMS;
- un format de codage, un fichier comprenant un contenu audio pouvant par exemple être disponible dans plusieurs formats (compressé MP3 ou non compressé PCM, etc);
- une résolution, lorsque le contenu est une photo ou un contenu vidéo disponible dans plusieurs résolutions;
- un identifiant du type MIME de codage des données du contenu codé dans le fichier ("audio/mpeg", "audio/mp3", ...);
- un protocole de transport à utiliser pour transporter les données du fichier lors de la restitution du contenu ("http-get", "rtsp", ...).

L'invention ne nécessite aucune modification des serveurs de contenus DMS existants, ni des dispositifs de restitution DMR, ni des parties du standard UPnP concernant ces deux types d'entités.

L'invention repose notamment sur l'ajout de fonctions nouvelles à un dispositif de pilotage DMC conforme au standard UPnP (ou Point de Contrôle UPnP).

L'invention est décrite plus en détail dans le cas de son application à une méthode d'accès aux contenus numériques référencés par un serveur de contenus d'un réseau local RS1.

Le réseau RS1 est également nommé ici réseau source. Il s'agit en particulier de contenus multimédia, par exemple, vidéo et / ou morceaux de musique.

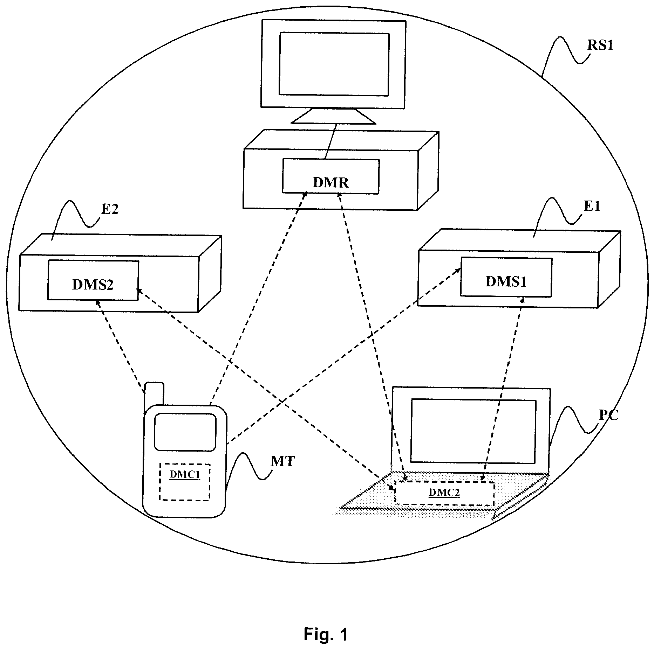

Le système représenté à la figure 1 est organisé autour du réseau local RS1, sous forme par exemple de réseau domestique. Ce système comprend les entités suivantes:
- un équipement MT d'un utilisateur U1, sous forme par exemple de terminal mobile, intégrant un dispositif de pilotage UPnP de type DMC, référencé DMC1 ;
- un équipement PC d'un utilisateur U1, sous forme par exemple d'ordinateur personnel, intégrant un dispositif de pilotage UPnP de type DMC, référencé DMC2;
- un équipement de restitution intégrant un dispositif de restitution UPnP de type DMR, référencé DMR1 ;
- deux serveur de contenus UPnP, de type DMS, référencés DMS1 et DMS2, connectés au réseau source RS1 et intégrés respectivement dans un équipement E1 et un équipement E2.

Le terminal mobile MT comprend un écran sur lequel est affichée une interface utilisateur, au moins une mémoire pour stocker un programme, et au moins un processeur de données apte à exécuter un programme. Le dispositif de pilotage DMC1 est réalisé sous forme de module logiciel, apte à être exécuté par le terminal mobile MT et dont l'interface utilisateur est conçue pour s'afficher sur l'écran du terminal MT.

L'équipement PC est intègre un écran sur lequel est affichée une interface utilisateur, au moins une mémoire pour stocker un programme, et au moins un processeur de données apte à exécuter un programme. Le dispositif de pilotage DMC2 est réalisé sous forme de module logiciel, apte à être exécuté par l'équipement PC et dont l'interface utilisateur est conçue pour s'afficher sur l'écran de l'équipement PC.

L'équipement de restitution, intégrant le dispositif de restitution DMR1, est par exemple constitué d'une Set-Top-Box raccordée au réseau RS1 et associée à un écran de télévision pour l'affichage de la vidéo d'un contenu multimédia et/ou la restitution du son d'un contenu multimédia.

Les équipements E1 et E2, intégrant les serveurs de contenus DMS1 et DMS2, sont par exemple réalisés sous forme d'une Set-Top-Box raccordée au réseau RS1, comprenant un disque dur de stockage de contenus ainsi qu'un module logiciel mettant en oeuvre les fonctionnalités et interfaces prévues dans le standard UPnP pour un serveur de contenu.

Dans l'exemple d'application de l'invention décrit ici, il est supposé qu'un utilisateur utilise le dispositif de pilotage DMC1 pour déclencher une restitution d'un ou plusieurs contenus référencés sur l'un des serveurs de contenus DMS1 et DMS2 du réseau RS1, puis reprend la main au moyen du dispositif de pilotage DMC2.

Il est à noter toutefois que les rôles des dispositifs de pilotage DMC1 et DMC2 sont interchangeables: l'utilisateur peut déclencher la restitution au moyen du dispositif de pilotage DMC2 et reprendre la main avec le dispositif de pilotage DMC1. En conséquence, il est préférable que chaque dispositif de pilotage DMC1 ou DMC2 intègre les fonctions décrites ci-dessous pour les dispositifs de pilotage DMC1 et DMC2 et que chaque dispositif de pilotage DMC1 ou DMC2 comprenne des moyens de mise en oeuvre des étapes du procédé selon l'invention.

Conformément au standard UPnP, le dispositif de pilotage DMC1 est conçu pour envoyer à un dispositif de restitution UPnP des paramètres de restitution identifiant un contenu à restituer et déclencher de la restitution de ce contenu.

Selon l'invention, le dispositif de pilotage DMC1 est conçu pour enrichir les paramètres de restitution à envoyer au moyen d'informations de contexte de restitution comprenant:
- un identifiant de serveur utilisable pour adresser, à un serveur de contenus référençant ce contenu, une commande d'interrogation de ce serveur de contenus sur des contenus référencés par ce serveur;
- un identifiant d'objet utilisé par ce serveur de contenus pour référencer ce contenu.
- optionnellement, un identifiant (nommé "Parentld" dans le standard UPnP) du répertoire du CDS du serveur de contenus dans lequel est référencé le contenu à restituer;
- optionnellement, un mode de restitution: par exemple, une indication d'un mode "shuffle" (restitution dans un ordre aléatoire des contenus d'un ensemble de contenus) ou mode "repeat" (restitution en boucle d'un contenu ou d'un ensemble de contenus)..

Conformément à l'invention, le dispositif de pilotage DMC2 est conçu pour interroger un dispositif de restitution à piloter, sur lequel un contenu est en cours de restitution, afin d'obtenir des paramètres de restitution, identifiant ce contenu et ayant été fournis à ce dispositif de restitution par un dispositif de pilotage ayant déclenché cette restitution.

Lorsque les paramètres de restitution ont été fournis par le dispositif de pilotage DMC1, le dispositif de pilotage DMC2 est conçu pour rechercher et extraire de ces paramètres de restitution les informations de contexte de restitution qui ont été joints à ces paramètres de restitution par le dispositif de pilotage DMC1.

Conformément à l'invention, le dispositif de pilotage DMC2 est conçu pour, en utilisant l'identifiant de serveur, adresser au serveur de contenus ainsi identifié une commande d'interrogation de ce serveur de contenus sur des contenus référencés par ce serveur de contenus et pour présenter à un utilisateur une interface utilisateur de consultation de contenus référencés par ce serveur.

### Premier mode de réalisation

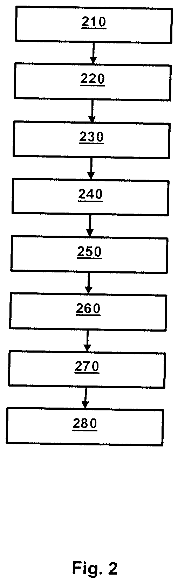

Ce premier mode de réalisation est décrit par référence à la figure 2, illustrant les étapes 210 à 280 exécutées par le dispositif de pilotage DMC1 ou de dispositif de pilotage DMC2.

Dans ce premier mode de réalisation, les métadonnées du contenu à restituer sont utilisées pour transmettre une information de contexte de restitution d'un dispositif de pilotage à un autre.

Cette information de contexte de restitution, comprend un identifiant d'objet, référençant le contenu en cours de restitution dans le CDS du serveur de contenus, et l'identifiant du serveur de contenus via lequel ce contenu est accessible. Il s'agit plus précisément d'un identifiant de serveur au moyen duquel est susceptible d'être émise une commande d'interrogation de ce serveur de contenus sur des contenus référencés par ce serveur.

Cette information de contexte de restitution comprend optionnellement un identifiant d'un répertoire du CDS de ce serveur de contenus de contenus dans lequel est référencé ce contenu.

Cette information de contexte de restitution comprend optionnellement une indication d'un mode de restitution à utiliser lors de la restitution d'un contenu ou d'un ensemble de contenus. Par exemple, une indication d'un mode "shuffle" (restitution dans un ordre aléatoire des contenus d'un ensemble de contenus) ou mode "repeat" (restitution en boucle d'un contenu ou d'un ensemble de contenus).

A l'étape **210**, cet utilisateur sélectionne un serveur de contenus, par exemple le serveur de contenus DMS1 dont l'identifiant UDN (Unique Device Name) est noté UDN_DMS1. Cet identifiant de serveur a été fourni par le serveur de contenus DMS1 au dispositif de pilotage DMC1 lors d'une phase de découverte de dispositifs UPnP mise en oeuvre par ce dispositif de pilotage conformément au standard UPnP.

Le dispositif de pilotage DMC1 émet une commande d'interrogation de ce serveur de contenus sur des contenus référencés par ce serveur, une telle commande d'interrogation étant en l'occurrence une action UPnP "Browse". Le serveur de contenus DMS1 envoie en réponse les métadonnées d'une liste de contenus multimédia référencés et accessibles par le serveur de contenus DMS1.

Cette liste de contenus multimédia, ou une partie au moins de cette liste, est présentée sur l'écran du terminal mobile MT afin de lui permettre de choisir un contenu à restituer.

A l'étape **220**, cet utilisateur sélectionne un contenu dans cette liste de contenus multimédia, par exemple un contenu M1. Le dispositif de pilotage DMC1 interroge alors le serveur de contenus DMS1 pour obtenir l'ensemble des métadonnées du contenu sélectionné: le dispositif de pilotage DMC1 émet une requête UPNP nommée "Browse" avec par exemple les paramètres suivants:
Browse( ObjectID=ID_M1, BrowseFlag="BrowseMetadata", Filter="*", Startinglndex=0, RequestedCount=0, SortCriteria="")

En réponse à cette requête, le serveur de contenus DMS1 envoie au dispositif de pilotage DMC1 un document XML noté D1, contenant l'ensemble des métadonnées du contenu M1.

Ces métadonnées comprennent:
- une adresse de type URI ("Uniform Resource Identifier"), qui indique la localisation de ce contenu dans le réseau, notamment indique l'entité du réseau via laquelle ce contenu peut être obtenu: cette adresse est notée URI1_M1;
- un identifiant d'objet ("objectID" dans le standard UPnP) qui référence le contenu dans l'arborescence du CDS du serveur de contenus serveur de contenus DMS1: cet identifiant d'objet est noté ID_M1;
- un identifiant de répertoire ("parentID" dans le standard UPnP) qui identifie dans quel répertoire de l'arborescence du CDS du serveur de contenus DMS1 se trouve le contenu en question: cet identifiant d'objet est noté ID_RL;

L'adresse URI1_M1 du contenu M1 est par exemple sous la forme **http://192.168.1.15:8055/iazz1.mp3**
où 192.168.1.15 est l'adresse IP du serveur de contenus DMS1 référençant et stockant ce contenu, 8055 le port de communication du serveur de contenus DMS1, et "jazz1.mp3" le nom du fichier de ressource contenant les données du contenu.

Cette adresse est notée URI1_M1.

A la différence de l'adresse IP, l'identifiant de serveur de type UDN est un identifiant désignant l'entité UPnP à laquelle est adressée une commande UPnP et devant être utilisé pour envoyer une telle commande UPnP à cette entité.

Dans l'invention, l'identifiant de serveur fourni permet donc d'envoyer au serveur de contenus visé une commande d'interrogation de ce serveur de contenus sur des contenus référencés par ce serveur, une telle commande d'interrogation étant en l'occurrence une action UPnP "Browse".

Un identifiant UDN est une séquence alphanumérique associée de manière univoque à une entité UPnP, par exemple sous la forme :
uuid:1ad433da-1dd2-11b2-8c4a-e7c6697351ff

Lors de l'étape **230**, l'utilisateur sélectionne un dispositif de restitution, par exemple le dispositif de restitution DMR1, puis déclenche la restitution du contenu sélectionné à l'étape 251 sur le dispositif de restitution ainsi sélectionné. Le dispositif de pilotage DMC1 effectue alors les opérations suivantes.

Le dispositif de pilotage DMC1 modifie le document D1 qui contient les métadonnées du contenu M1 en y ajoutant un champ d'information, repéré par une balise nommée par exemple "vendor-specific", contenant l'identifiant de serveur UDN_DMS1 du serveur de contenus DMS1 référençant le contenu M1 à restituer. Ce champ d'informations est par exemple sous la forme:

```
   <vendor:media_server_udn>UDN_DMS1</vendor:media_server_udn>
```

Un exemple de fichier XML avec métadonnées enrichies par un identifiant UDN de serveur est donné en annexe 1.

Dans une première variante, le dispositif de pilotage DMC1 ajoute dans le document D1 un deuxième champ d'information comprenant un identifiant d'un répertoire du CDS du serveur de contenus DMS1 dans lequel sont référencés le ou les contenus à restituer.

Dans une deuxième variante, combinable avec la première variante, le dispositif de pilotage DMC1 ajoute dans le document D1 un troisième champ d'information comprenant une indication d'un mode de restitution à utiliser lors de la restitution du ou des contenus. Par exemple, une indication d'un mode "shuffle" (restitution dans un ordre aléatoire des contenus d'un ensemble de contenus) ou mode "repeat" (restitution en boucle d'un contenu ou d'un ensemble de contenus).

Le document D1 ainsi enrichi est noté D1BIS.

Lors de l'étape 230, le dispositif de pilotage DMC1 envoie une commande comprenant les paramètres de restitution au dispositif de restitution DMR1, en invoquant l'action "SetAVTransportURI" du service UPnP "AVTransport" mis en oeuvre par le dispositif de restitution DMR1. Les paramètres de restitution comprennent notamment l'adresse URI1_M1 du contenu à restituer et le document D1BIS contenant les métadonnées enrichies du contenu M1.

Lors de l'étape 240, le dispositif de pilotage DMC1 déclenche la restitution du contenu M1, par envoi d'une commande de restitution au dispositif de restitution DMR1, en l'occurrence invoque une action nommée "Play" du service UPnP "AVTransport" mis en oeuvre par le dispositif de restitution DMR1.

Lors de l'étape 250, l'utilisateur (ou un autre utilisateur que celui concerné par les étapes 210 à 240) décide d'utiliser un autre terminal, en l'occurrence le terminal PC1 pour contrôler la restitution du contenu en cours de restitution sur le dispositif de restitution DMR1. Ceci s'effectue grâce à la présence dans cet autre terminal d'un autre dispositif de pilotage DMC2, qui est apte à obtenir, par interrogation du dispositif de restitution DMR1, les informations de contexte de restitution transmises par le dispositif de pilotage DMC1 au dispositif de restitution DMR1 avec les paramètres de restitution du contenu considéré.

L'utilisateur choisit dans l'interface utilisateur du dispositif de pilotage DMC2 le dispositif de restitution qu'il souhaite piloter: en l'occurrence, il choisit le dispositif de restitution DMR1.

Le dispositif de pilotage DMC2 interroge ensuite le dispositif de restitution DMR1 sélectionné pour obtenir des informations de contexte de restitution relative à un contenu qui serait en cours de restitution par ce dispositif de restitution, afin d'obtenir notamment un identifiant d'objet, référençant ce contenu, et un identifiant du serveur de contenu via lequel ledit contenu est accessible. Ceci se déroule de la manière suivante.

Le dispositif de pilotage DMC2 interroge le dispositif de restitution DMR1 sélectionné pour obtenir les métadonnées du contenu en cours de restitution: le dispositif de pilotage DMC2 invoque l'action "GetMediaInfo" du service AVTransport du dispositif de restitution DMR1. En réponse à cette interrogation, le dispositif de restitution DMR1 envoie dans le champ nommé "CurrentURIMetadata" les métadonnées demandées, contenant le document D1BIS tel que modifié par le dispositif de pilotage DMC1.

Le dispositif de pilotage DMC2 analyse le document D1BIS et en extrait les données suivantes :
- l'identifiant d'objet ID_M1 référençant le contenu M1,
- l'identifiant de serveur UDN_DMS1 du serveur de contenus DMS1,
- le cas échéant (cas de la première variante décrite ci-dessus), l'identifiant ID_R1 du répertoire du CDS du serveur de contenus DMS1 dans lequel est référencé le contenu M1,
- le cas échéant (cas de la deuxième variante décrite ci-dessus), un mode de restitution.

Si l'identifiant ID_R1 du répertoire du CDS du serveur de contenus DMS1 dans lequel est référencé le contenu M1 ne se trouve pas dans les métadonnées reçues, le dispositif de pilotage DMC2 envoie au serveur de contenus DMS1 identifié par l'identifiant UDN_DMS1 une requête d'interrogation "Browse", contenant l'identifiant d'objet ID_M1 du contenu M1, afin d'obtenir cet identifiant de répertoire. Le serveur de contenus DMS1 envoie en réponse cet identifiant.

A l'étape 260, le dispositif de pilotage DMC2 interroge le dispositif de restitution DMR1 sélectionné pour obtenir des informations sur l'état de ce dispositif de restitution DMR1: le DMC2 invoque l'action "GetTransportState" du service AVTransport du dispositif de restitution DMR1. En réponse à cette interrogation, le dispositif de restitution DMR1 envoie une information d'état, indiquant par exemple s'il se trouve en état de lecture, à l'arrêt ou en pause.

Lorsque cela est requis par l'utilisateur du dispositif de pilotage DMC2, le dispositif de pilotage DMC2 affiche une interface utilisateur de pilotage du dispositif de restitution DMR1, contenant une information sur l'état du dispositif de restitution DMR1.

A l'étape 270, le dispositif de pilotage DMC2 interroge ensuite le serveur de contenus DMS1 identifié par l'identifiant UDN UDN_DMS1 pour obtenir des informations sur ce répertoire, notamment sur les autres contenus de ce répertoire: il envoie une action "Browse" au serveur de contenus DMS1, contenant l'identifiant ID_R1 de ce répertoire. Le serveur de contenus DMS1 envoie en réponse une liste de contenus multimédia, et les métadonnées associées à ces contenus.

Le dispositif de pilotage DMC2 présente alors une interface utilisateur de consultation des contenus du serveur de contenus DMS1, présentant des informations sur le répertoire dans lequel se trouve le contenu M1, interface dans laquelle le contenu en cours de restitution est automatiquement sélectionné: l'utilisateur est ainsi replacé dans le répertoire qui contient le contenu M1 sans qu'il ne soit nécessaire à cet utilisateur de le rechercher à nouveau en se déplaçant dans l'arborescence des contenus du CDS du serveur de contenus DMS1. Ce répertoire est donc le répertoire couramment sélectionné et le contenu M1 le contenu couramment sélectionné.

Les étapes 260 et 270 sont susceptibles d'être exécutées dans l'ordre inverse: d'abord l'étape 270 puis l'étape 260, selon ce qui est prévu dans le logiciel du dispositif de pilotage DMC2 et selon les actions opérées par l'utilisateur sur l'interface utilisateur du dispositif de pilotage DMC2: soit demande d'affichage d'une première interface utilisateur du dispositif de restitution DMR1, soit demande d'affichage d'une deuxième interface utilisateur de consultation du CDS du serveur de contenus DMS1, soit encore demande d'affichage d'une interface utilisateur combinant la première interface utilisateur avec la deuxième interface utilisateur.

L'étape 280 est effectuée suite aux étapes 260 et 270.

Suite aux étapes 260 et 270, l'utilisateur dispose lors de l'étape 280 à la fois d'une information sur l'état du dispositif de restitution DMR1 et une information sur le contenu en cours de restitution sur ce dispositif de restitution DMR1. Cet utilisateur peut donc déclencher toute opération proposée dans l'interface utilisateur du dispositif de restitution DMR1 ou dans l'interface utilisateur de consultation du CDS du serveur de contenus serveur de contenus DMS1, par exemple des opérations telles que:
- arrêt ou mise en pause de la restitution du contenu M1, en agissant sur l'interface utilisateur de pilotage du dispositif de restitution DMR1 ;
- envoi d'une commande pour restituer le contenu suivant ou précédent le contenu couramment sélectionné (commande "next" ou "previous") dans la liste de contenus multimédia du répertoire couramment sélectionné: ceci se fait en en agissant sur l'interface utilisateur de pilotage du dispositif de restitution DMR1, les contenus de la liste formant une "liste de restitution" ou "playlist" en terminologie anglo-saxonne;
- modification du mode de restitution: suppression ou actionnement du mode "shuffle", suppression ou actionnement du mode "repeat": en agissant sur l'interface utilisateur de pilotage du dispositif de restitution DMR1;
- consultation du répertoire couramment sélectionné en agissant sur l'interface utilisateur de consultation du CDS du serveur de contenus DMS1, afin de sélectionner un contenu à restituer et de déclencher la restitution de ce contenu nouvellement sélectionné.
- consultation du répertoire proche du répertoire couramment sélectionné en agissant sur l'interface utilisateur de consultation du CDS du serveur de contenus DMS1, afin de sélectionner un contenu à restituer et de déclencher la restitution de ce contenu nouvellement sélectionné.

### Deuxième mode de réalisation

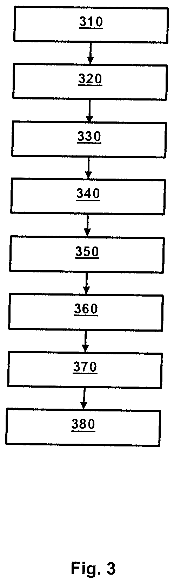

Ce deuxième mode de réalisation est décrit par référence à la figure 3, illustrant les étapes 310 à 380 exécutées par le dispositif de pilotage DMC1 ou de dispositif de pilotage DMC2.

Dans le deuxième mode de réalisation, c'est l'adresse URI du contenu à restituer (et non pas les métadonnées, comme dans le premier mode de réalisation) qui est utilisée pour transmettre une information de contexte de restitution d'un dispositif de pilotage UPnP à un autre.

Les étapes initiales 310 et 320 sont identiques respectivement aux étapes 210 et 220.

Lors de l'étape **330**, l'utilisateur sélectionne un dispositif de restitution, par exemple le dispositif de restitution DMR1, puis déclenche la restitution du contenu sélectionné à l'étape 251 sur le dispositif de restitution ainsi sélectionné. Le dispositif de pilotage DMC1 effectue alors les opérations suivantes :
Le dispositif de pilotage DMC1 modifie l'adresse URI du contenu M1 en y insérant l'identifiant UDN_DMS1 du serveur de contenus DMS1 ainsi que l'identifiant d'objet (ou "objectID") référençant, dans le CDS du serveur de contenus DMS1, le contenu M1 à restituer. L'adresse ainsi enrichie est par exemple de la forme:
**http://192.168.1.15:8055/photo/jazz1.mp3?dmsUDN/**uuid:5772e3ba-e9cdb/objectID=2$73688166$805306398

Cette adresse enrichie est noté URI2_M1.

Dans une première variante, le dispositif de pilotage DMC1 insère en outre dans l'adresse URI2_M1 un identifiant d'un répertoire du CDS de ce serveur de contenus de contenus dans lequel sont référencés le ou les contenus à restituer.

Dans une deuxième variante, combinable avec la première variante, le dispositif de pilotage DMC1 insère en outre dans l'adresse URI2_M1 une indication d'un mode de restitution à utiliser lors de la restitution du ou des contenus. Par exemple, une indication d'un mode "shuffle" (restitution dans un ordre aléatoire des contenus d'un ensemble de contenus) ou mode "repeat" (restitution en boucle d'un contenu ou d'un ensemble de contenus).

Lors de l'étape 330, le dispositif de pilotage DMC1 envoie une commande comprenant les paramètres de restitution au dispositif de restitution DMR1, en invoquant l'action "SetAVTransportURI" du service UPnP "AVTransport" mis en oeuvre par le dispositif de restitution DMR1.

Les paramètres de restitution comprennent notamment l'adresse URI2_M1 du contenu à restituer et le document D1 contenant les métadonnées du contenu M1.

L'étape 340 est identique à l'étape 240, lors de laquelle le dispositif de pilotage DMC1 déclenche la restitution du contenu M1.

Lors de l'étape 350, l'utilisateur (ou un autre utilisateur que celui concerné par les étapes 310 à 340) décide d'utiliser un autre terminal, en l'occurrence le terminal PC1 pour contrôler la restitution du contenu en cours de restitution sur le dispositif de restitution DMR1. Ceci s'effectue grâce à la présence dans cet autre terminal d'un autre dispositif de pilotage DMC2, qui est apte à obtenir du dispositif de restitution DMR1 les informations de contexte de restitution transmises par le dispositif de pilotage DMC1 au dispositif de restitution DMR1.

L'utilisateur choisit dans l'interface utilisateur du dispositif de pilotage DMC2 le dispositif de restitution qu'il souhaite piloter: en l'occurrence, il choisit le dispositif de restitution DMR1.

Le dispositif de pilotage DMC2 interroge ensuite le dispositif de restitution DMR1 sélectionné pour obtenir des informations de contexte de restitution relative à un contenu qui serait en cours de restitution par ce dispositif de restitution, afin d'obtenir un identifiant d'un objet référençant ce contenu et un identifiant du serveur de contenus via lequel ledit contenu est accessible. Ceci se déroule de la manière suivante.

Le dispositif de pilotage DMC2 interroge le dispositif de restitution DMR1 sélectionné pour obtenir l'adresse URI du contenu en cours de restitution: le dispositif de pilotage DMC2 invoque l'action "GetMedialnfo" du service AVTransport du dispositif de restitution DMR1. En réponse à cette interrogation, le dispositif de restitution DMR1 envoie dans le champ nommé "CurrentURI", l'adresse URI2_M1 telle que modifiée par le dispositif de pilotage DMC1.

Le dispositif de pilotage DMC2 analyse l'adresse URI2_M1 et en extrait les données suivantes :
- l'identifiant d'objet ID_M1 référençant le contenu M1,
- l'identifiant de serveur UDN_DMS1 du serveur de contenus DMS1,
- le cas échéant (cas de la première variante décrite ci-dessus), l'identifiant ID_R1 du répertoire du CDS du serveur de contenus DMS1 dans lequel est référencé le contenu M1.
- le cas échéant (cas de la deuxième variante décrite ci-dessus), un mode de restitution.

Si l'identifiant du répertoire du CDS du serveur de contenus DMS1 dans lequel est référencé le contenu M1 ne se trouve pas dans l'adresse URI2 reçue, le dispositif de pilotage DMC2 envoie au serveur de contenus DMS1 identifié par l'identifiant UDN UDN_DMS1 une requête d'interrogation "Browse", contenant l'identifiant "Objectld" ID_M1 du contenu M1, afin d'obtenir cet identifiant. Le serveur de contenus DMS1 envoie en réponse cet identifiant.

Les étapes 360, 370 et 380 suivantes sont identiques respectivement aux étapes 260, 270 et 280 déjà décrites: affichage (étape 360) d'une interface utilisateur de pilotage du dispositif de restitution DMR1 présentant une information sur l'état du dispositif de restitution DMR1, affichage (étape 370) d'une interface utilisateur de consultation des contenus du serveur de contenus DMS1, présentant des informations sur le répertoire dans lequel se trouve le contenu M1, puis déclenchement d'une action (étape 380) de l'utilisateur au moyen de l'une de ces deux interfaces utilisateur.

L'invention permet aux utilisateurs d'avoir une continuité d'usage quel que soit le dispositif de pilotage DMC1 ou DMC2 utilisé. En effet, les informations de contexte de restitution sont transmises d'un dispositif de pilotage à un autre, le dispositif de restitution servant d'intermédiaire, dépositaire de ces informations de contexte de restitution, qui lui ont été transmises par celui de ces dispositifs de pilotage qui a configuré et déclenché la restitution. Au moment de la configuration de la restitution, les paramètres de restitution transmis sont enrichis avec les informations de contexte de restitution.

L'invention évite à l'utilisateur de repasser par les étapes de sélection de contenu et de sélection de répertoires dans le cas où il souhaite simplement consulter un autre contenu du même répertoire ou d'un répertoire proche.

L'invention permet également d'assurer une continuité de la restitution de tous les contenus d'un répertoire, même si un dispositif de pilotage disparaît du réseau pendant cette restitution (le terminal se déconnecte du réseau ou est éteint), du moment que l'utilisateur reprend la main sur un autre dispositif de pilotage.

Ces informations de contexte de restitution sont transportées d'un dispositif de pilotage à un autre dans les métadonnées du contenu à restituer ou dans une adresse URI servant à localiser ce contenu.

Les informations de contexte de restitution sont insérées dans l'adresse URI ou les métadonnées par le dispositif de pilotage UPnP préalablement à l'appel de l'action UPnP "SetAVTransportURI" du service "AVTransport" du dispositif de restitution visé. Certaines de ces informations de contexte de restitution (identifiant de serveur notamment) peuvent également être insérées dans les métadonnées du contenu par le serveur de contenus UPnP référençant ce contenu. Certaines de ces informations de contexte de restitution (mode de restitution notamment) ne peuvent, elles, qu'être insérées par le dispositif de pilotage UPnP, qui seul dispose de ce type d'information.

L'invention est applicable également à un dispositif de restitution de type DMP UPnP / DLNA ("Digital Media Player"), qui intègre les fonctions d'un DMC UPnP ("Control Point" ou "Digital Media Controller") et celle d'un DMR UPnP ("Digital Media Renderer"), et qu'un utilisateur, ayant initié une restitution de contenu sur le DMR inclut dans ce DMP au moyen d'un autre dispositif de pilotage UPnP, reprend le contrôle de la restitution sur ce DMR au moyen de l'interface utilisateur ou la télécommande du DMC inclut dans ce DMP. La situation inverse avec bascule d'un mode de pilotage à partir de l'interface utilisateur ou la télécommande du DMC inclut dans ce DMP vers un mode de pilotage au moyen d'un autre dispositif de pilotage UPnP est également envisageable.

Le mécanisme proposé par l'invention est transposable à d'autres protocoles, servant à la commande d'entités d'un réseau, par exemple le protocole "BONJOUR".

### ANNEXE 1

### Exemple de fichier XML de métadonnées enrichies

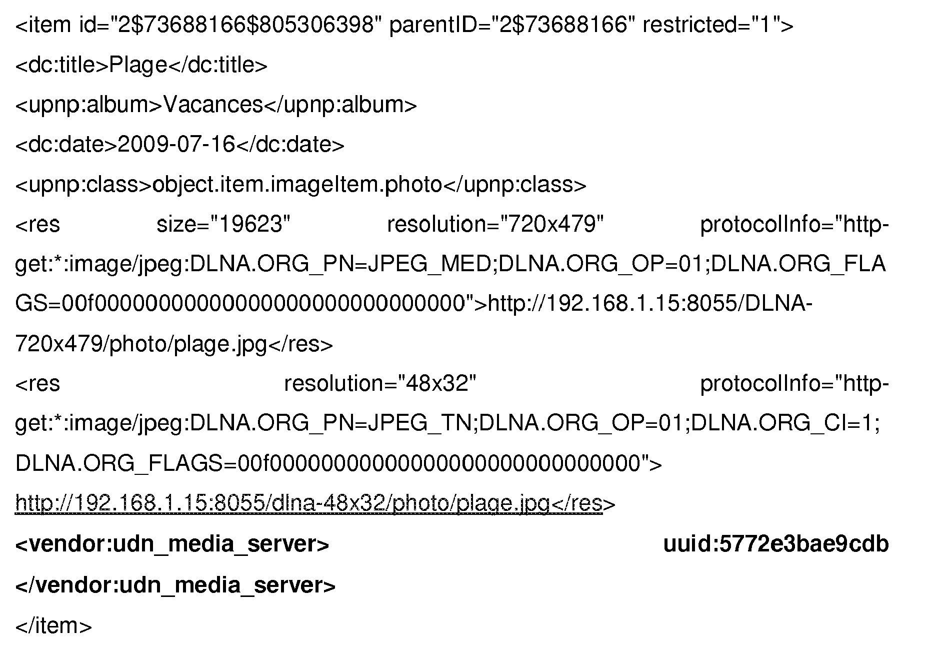

## Revendications

1. Procédé de pilotage mis en oeuvre par un dispositif de pilotage (DMC1) de dispositifs de restitution (DMR1) et de serveurs de contenus (DMS1, DMS2) d'une architecture UPnP ou DLNA de gestion de contenus, le procédé comprenant
- une étape (230) d'envoi à un dispositif de restitution de paramètres de restitution localisant un contenu à restituer, les paramètres de restitution envoyés étant susceptibles d'être obtenus par un autre dispositif de pilotage par interrogation dudit dispositif de restitution;
- une étape (240) de déclenchement de la restitution, par le dispositif de restitution, dudit contenu à restituer localisé par les paramètres de restitution envoyés,
**caractérisé en ce que** les paramètres de restitution sont enrichis, préalablement à leur envoi (230), d'un identifiant de serveur de type UDN désignant le serveur de contenus référençant le contenu à restituer, l'identifiant de serveur de type UDN étant utilisable pour adresser à partir de l'autre dispositif de pilotage au serveur de contenus référençant ledit contenu à restituer une commande d'interrogation de ce serveur de contenus sur des contenus référencés par ce serveur de contenus.

2. Procédé selon la revendication 1, dans lequel un identifiant d'objet utilisé par ledit serveur de contenus pour référencer ledit contenu est joint aux paramètres de restitution.

3. Procédé selon la revendication 1 comprenant une étape d'enrichissement de métadonnées dudit contenu avec ledit identifiant de serveur de type UDN, les paramètres de restitution envoyés comprenant les métadonnées enrichies.

4. Procédé selon la revendication 1 comprenant une étape d'obtention auprès dudit serveur de contenus de métadonnées dudit contenu enrichies avec ledit identifiant de serveur de type UDN, les paramètres de restitution envoyés comprenant les métadonnées enrichies.

5. Procédé selon la revendication 1 ou 2, comprenant une étape d'enrichissement d'une adresse dudit contenu avec ledit identifiant de serveur de type UDN, les paramètres de restitution envoyés comprenant l'adresse ainsi enrichie.

6. Procédé selon la revendication 5 lorsqu'elle dépend de la revendication 2, comprenant une étape d'enrichissement de ladite adresse avec ledit identifiant d'objet, les paramètres de restitution envoyés comprenant l'adresse ainsi enrichie.

7. Procédé selon la revendication 1, dans lequel les paramètres de restitution envoyés sont enrichis en outre d'un identifiant de répertoire de contenus dans lequel est référencé le contenu par ledit serveur de contenu.

8. Procédé selon la revendication 1, dans lequel les paramètres de restitution envoyés sont enrichis en outre d'un mode de restitution.

9. Dispositif de pilotage (DMC1) de dispositifs de restitution et de serveurs de contenus d'une architecture UPnP ou DLNA de gestion de contenus, le dispositif de pilotage comprenant
- des moyens d'envoi à un dispositif de restitution de paramètres de restitution localisant un contenu à restituer, les paramètres de restitution envoyés étant susceptibles d'être obtenus par un autre dispositif de pilotage par interrogation dudit dispositif de restitution;
- des moyens de déclenchement de la restitution dudit contenu,
**caractérisé en ce que** les paramètres de restitution envoyés sont enrichis d'un identifiant de serveur de type UDN désignant un serveur de contenus, l'identifiant de serveur étant utilisable pour adresser, au serveur de contenus référençant ledit contenu à restituer, une commande d'interrogation de ce serveur de contenus sur des contenus référencés par ce serveur de contenus.

10. Dispositif de pilotage de dispositifs de restitution et de serveurs de contenus d'une architecture UPnP ou DLNA de gestion de contenus, le dispositif de pilotage comprenant
- des moyens d'interrogation (250) d'un dispositif de restitution pour obtenir des paramètres de restitution, localisant un contenu en cours de restitution, fournis à ce dispositif de restitution par un dispositif de pilotage ayant déclenché ladite restitution et enrichis d'un identifiant de serveur de type UDN désignant le serveur de contenus référençant le contenu en cours de restitution;
- des moyens pour, en utilisant ledit identifiant de serveur de type UDN , adresser audit serveur de contenus une commande d'interrogation de ce serveur de contenus sur des contenus référencés par ce serveur de contenus;
- des moyens de présentation (260) à un utilisateur d'une interface utilisateur de consultation de contenus référencés par ce serveur de contenus.

11. Point de contrôle UPnP incluant un dispositif de pilotage selon la revendication 9 ou 10.

## Patentansprüche

1. Steuerverfahren, das von einem Steuergerät (DMC1) von Wiedergabevorrichtungen (DMR1) und Inhaltsservern (DMS1, DMS2) einer UPnP- oder DLNA-Architektur zur Verwaltung von Inhalten eingesetzt wird, wobei das Verfahren umfasst:
- einen Schritt (230) des Sendens, an eine Wiedergabevorrichtung, von Wiedergabeparametern, die einen wiederzugebenden Inhalt lokalisieren, wobei die gesandten Wiedergabeparameter geeignet sind, von einer anderen Steuervorrichtung durch Abfrage der Wiedergabevorrichtung erhalten zu werden;
- einen Schritt (240) des Auslösens der Wiedergabe, durch die Wiedergabevorrichtung, des wiederzugebenden Inhalts, der durch die gesandten Wiedergabeparameter lokalisiert ist,
**dadurch gekennzeichnet, dass** die Wiedergabeparameter vor ihrem Senden (230) mit einem Identifikator des Servers vom Typ UDN ergänzt werden, der den Inhaltsserver bezeichnet, der den wiederzugebenden Inhalt referenziert, wobei der Serveridentifikator vom Typ UDN verwendbar ist, um von der anderen Vorrichtung an den Inhaltsserver, der den wiederzugebenden Inhalt referenziert, einen Befehl zur Abfrage dieses Inhaltsservers zu von diesem Inhaltsserver referenzierten Inhalten zu richten.

2. Verfahren nach Anspruch 1, bei dem ein Objektidentifikator, der von dem Inhaltsserver verwendet wird, um den Inhalt zu referenzieren, den Wiedergabeparametern beigefügt wird.

3. Verfahren nach Anspruch 1, umfassend einen Schritt der Ergänzung von Metadaten des Inhalts durch den Serveridentifikator vom Typ UDN, wobei die gesandten Wiedergabeparameter die ergänzten Metadaten umfassen.

4. Verfahren nach Anspruch 1, umfassend einen Schritt des Erhalts, beim Inhaltsserver, von Metadaten des Inhalts, ergänzt durch den Serveridentifikator vom Typ UDN, wobei die gesandten Wiedergabeparameter die ergänzten Metadaten umfassen.

5. Verfahren nach Anspruch 1 oder 2, umfassend einen Schritt der Ergänzung einer Adresse des Inhalts mit dem Serveridentifikator vom Typ UDN, wobei die gesandten Wiedergabeparameter die so ergänzte Adresse umfassen.

6. Verfahren nach Anspruch 5, wenn er von Anspruch 2 abhängt, umfassend einen Schritt der Ergänzung der Adresse mit dem Objektidentifikator, wobei die gesandten Wiedergabeparameter die so ergänzte Adresse umfassen.

7. Verfahren nach Anspruch 1, bei dem die gesandten Wiedergabeparameter ferner mit einem Identifikator eines Inhaltsverzeichnisses ergänzt werden, in dem der Inhalt durch den Inhaltsserver referenziert ist.

8. Verfahren nach Anspruch 1, bei dem die gesandten Wiedergabeparameter ferner mit einem Wiedergabemodus ergänzt werden.

9. Vorrichtung zur Steuerung (DMC1) von Wiedergabevorrichtungen und Inhaltsservern einer UPnP- oder DLNA-Architektur zur Verwaltung von Inhalten, wobei die Steuervorrichtung umfasst:
- Mittel zum Senden, an eine Wiedergabevorrichtung, von Wiedergabeparametern, die einen wiederzugebenden Inhalt lokalisieren, wobei die gesandten Wiedergabeparameter geeignet sind, von einer anderen Steuervorrichtung durch Abfrage der Wiedergabevorrichtung erhalten zu werden;
- Mittel zum Auslösen der Wiedergabe des Inhalts,
**dadurch gekennzeichnet, dass** die gesandten Wiedergabeparameter mit einem Identifikator des Servers vom Typ UDN ergänzt werden, der einen Inhaltsserver bezeichnet, wobei der Serveridentifikator verwendbar ist, um an den Inhaltsserver, der den wiederzugebenden Inhalt referenziert, einen Befehl zur Abfrage dieses Inhaltsservers zu von diesem Inhaltsserver referenzierten Inhalten zu richten.

10. Vorrichtung zur Steuerung von Wiedergabevorrichtungen und Inhaltsservern einer UPnP- oder DLNA-Architektur zur Verwaltung von Inhalten, wobei die Steuervorrichtung umfasst:
- Mittel zur Abfrage (250) eines Wiedergabevorrichtung, um Wiedergabeparameter zu erhalten, die einen Inhalt während der Wiedergabe lokalisieren, die an diese Wiedergabevorrichtung von einer Steuervorrichtung geliefert werden, die die Wiedergabe ausgelöst hat, und die mit einem Serveridentifikator vom Typ UDN ergänzt sind, der den Inhaltsserver bezeichnet, der den Inhalt während der Wiedergabe referenziert;
- Mittel, um unter Verwendung des Serveridentifikators vom Typ UDN an den Inhaltsserver einen Abfragebefehl dieses Inhaltsservers zu durch diesen Inhaltsserver referenzierten Inhalten zu richten;
- Mittel (260) zur Bereitstellung einer Benutzerschnittstelle zur Konsultation von Inhalten, die durch diesen Inhaltsserver referenziert sind, für einen Benutzer.

11. UPnP-Kontrollpunkt, der eine Steuervorrichtung nach Anspruch 9 oder 10 einschließt.

## Claims

1. Control method implemented by a control device (DMC1) for controlling rendering devices (DMR1) and content servers (DMS1, DMS2) of a UPnP or DLNA content management architecture, the method comprising
- a step (230) of sending, to a rendering device, rendering parameters locating a content to be rendered, the sent rendering parameters being able to be obtained by another control device by interrogating said rendering device;
- a step (240) of triggering rendering, by the rendering device, of said content to be rendered located using the sent rendering parameters,
**characterized in that** the rendering parameters are enriched, prior to them being sent (230), with a UDN server identifier denoting the content server referencing the content to be rendered, the UDN server identifier being able to be used to address, from the other control device to the content server referencing said content to be rendered, a command to interrogate this content server as to content referenced by this content server.

2. Method according to Claim 1, wherein an object identifier used by said content server to reference said content is joined to the rendering parameters.

3. Method according to Claim 1, comprising a step of enriching metadata of said content with said UDN server identifier, the sent rendering parameters comprising the enriched metadata.

4. Method according to Claim 1, comprising a step of obtaining, from said content server, metadata of said content that are enriched with said UDN server identifier, the sent rendering parameters comprising the enriched metadata.

5. Method according to Claim 1 or 2, comprising a step of enriching an address of said content with said UDN server identifier, the sent rendering parameters comprising the thus-enriched address.

6. Method according to Claim 5 when dependent on Claim 2, comprising a step of enriching said address with said object identifier, the sent rendering parameters comprising the thus-enriched address.

7. Method according to Claim 1, wherein the sent rendering parameters are furthermore enriched with a content directory identifier in which the content is referenced by said content server.

8. Method according to Claim 1, wherein the sent rendering parameters are furthermore enriched with a rendering mode.

9. Control device (DMC1) for controlling rendering devices and content servers of a UPnP or DLNA content management architecture, the control device comprising
- means for sending, to a rendering device, rendering parameters locating an content to be rendered, the sent rendering parameters being able to be obtained by another control device by interrogating said rendering device;
- means for triggering rendering of said content,
**characterized in that** the sent rendering parameters are enriched with a UDN server identifier denoting a content server, the server identifier being able to be used to address, to the content server referencing said content to be rendered, a command to interrogate this content server as to content referenced by this content server.

10. Control device for controlling rendering devices and content servers of a UPnP or DLNA content management architecture, the control device comprising
- means (250) for interrogating a rendering device so as to obtain rendering parameters, locating an content currently being rendered and supplied to this rendering device by a control device that has triggered said rendering and that are enriched with a UDN server identifier denoting the content server referencing the content currently being rendered;
- means for addressing, to said content server, using said UDN server identifier, a command to interrogate this content server as to content referenced by this content server;
- means (260) for presenting, to a user, a user interface for consulting content referenced by this content server.

11. UPnP checkpoint including a control device according to Claim 9 or 10.
